(19) Europäisches Patentamt
European Patent Office
Office européen des brevets

(11) **EP 1 710 546 B1**

(12) **EUROPEAN PATENT SPECIFICATION**

(45) Date of publication and mention
of the grant of the patent:
**22.06.2011 Bulletin 2011/25**

(51) Int Cl.:
***G01G 7/02*** *(2006.01)*     ***G01B 7/02*** *(2006.01)*

(21) Application number: **06112351.9**

(22) Date of filing: **07.04.2006**

(54) **Method for measuring the length variation of a spring, and spring with corresponding sensor**

Verfahren zum Messen der Längenänderung einer Feder und Feder mit entsprechendem Sensor

Procédé de mesure de la variation de longueur d'un ressort et ressort possédant un capteur correspondant

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.04.2005 IT MO20050085**

(43) Date of publication of application:
**11.10.2006 Bulletin 2006/41**

(73) Proprietor: **M.D. MICRO DETECTORS S.p.A.**
**I-41100 Modena (IT)**

(72) Inventor: **Del Monte, Mauro**
**41100, MODENA (IT)**

(74) Representative: **Modiano, Micaela Nadia et al**
**Modiano Gardi Patents SAS**
**Via Meravigli 16**
**20123 Milano (IT)**

(56) References cited:
**DE-A1- 10 063 535**     **US-A- 4 498 043**
**US-A1- 2004 092 349**

- **PATENT ABSTRACTS OF JAPAN vol. 2003, no. 07, 3 July 2003 (2003-07-03) -& JP 2003 065704 A (MAYEKAWA MFG CO LTD), 5 March 2003 (2003-03-05)**

## Description

The present invention relates to a method for measuring the length variation of a spring and to a spring with a corresponding sensor. More particularly, the invention relates to a method for measuring the elongation of a spring, a measurement which can be used to monitor the vibrations of an object connected to said spring, in order to measure forces indirectly or to calculate a position.

The invention also relates to a spring with the corresponding sensor, which allows to perform the elongation measurement described above.

As it is known, there is a displacement sensor of the inductive type which uses the LVDT principles and consists of a primary coil and two secondary coils with a common movable magnetic core.

Sensors of the LVDT type are composed substantially of a fixed part and a movable part, which must be anchored to the two ends of the spring or in any case to two separate points thereof. Measurement of the elongation is determined indirectly by measuring the relative position of the two parts of the sensor. With a similar technique, it is also possible to provide capacitive sensors.

Other sensors that can be used for this purpose are load cells, which measure the load to which the spring is subjected. This information is then processed in order to determine the extent of the elongation. In order to be able to measure the force applied by the spring, the cell must be connected between a fixed point and an end of the spring or between the two ends of the spring.

Although these types of sensor can be applied to measuring the elongation of a spring, they require the use of two anchoring points, at least one of which belongs to the spring body.

JP 2003 065704 A1 discloses conventional direct electrical parameter measurement of a spring, with electrical leads connected at opposite ends of the spring.

US2004/092349 A1 discloses a magnetic flange and sensor coil externally arranged about a coil spring.

US4498043 discloses a three dimensional coordinate measuring probe in which capacitive transducer plates are arranged at the end of a biasing spring, one plate being attached to the spring and the other plate being attached to the probe.

DE 100 63 535 A1 discloses a conventional method for measuring impedance of a piezoelectric or magnetostrictive transducer.

The aim of the present invention is to provide a device for measuring the length variation of a spring which allows to determine reliably the elongation or contraction undergone by the spring with respect to a known static situation.

Within this aim, an object of the present invention is to provide a device for measuring the length variation of a spring when stressed which allows to provide a precise measurement of the elongation or contraction of the spring.

Another object of the present invention is to provide a device for measuring the length variation of a spring in which the sensor element is connected directly to said spring at only one of its ends, or in any case to a single point thereof.

Another object of the present invention is to provide a device for measuring the length variation of a spring in which the sensor can be provided simultaneously with the spring or can be applied at a later time to said spring.

Another object of the present invention is to provide a method for measuring the length variation of a spring and a corresponding sensor which are highly reliable, relatively simple to provide and at competitive costs.

In accordance with the invention, there is provided a method for measuring the length variation of a spring as defined in the appended claims.

Further characteristics and advantages of the invention will become better apparent from the following detailed description of preferred but not exclusive embodiments of the method and the device according to the present invention, illustrated by way of non-limiting example in the accompanying drawings, wherein:

Figure 1 is a view of a first embodiment of a spring with a sensor according to the present invention;
Figure 2 is a view of a second embodiment of a spring with a sensor according to the present invention;
Figure 3 is a schematic view of a spring with a sensor according to the first embodiment according to the present invention, shown in the traction condition;
Figure 4 is a block diagram of the principle on which the measurement method according to the present invention is based; and
Figure 5 is a circuit diagram of a sensor of the inductive type.

With reference to the figures, a method and a corresponding sensor for measuring the length variation of a spring are as follows.

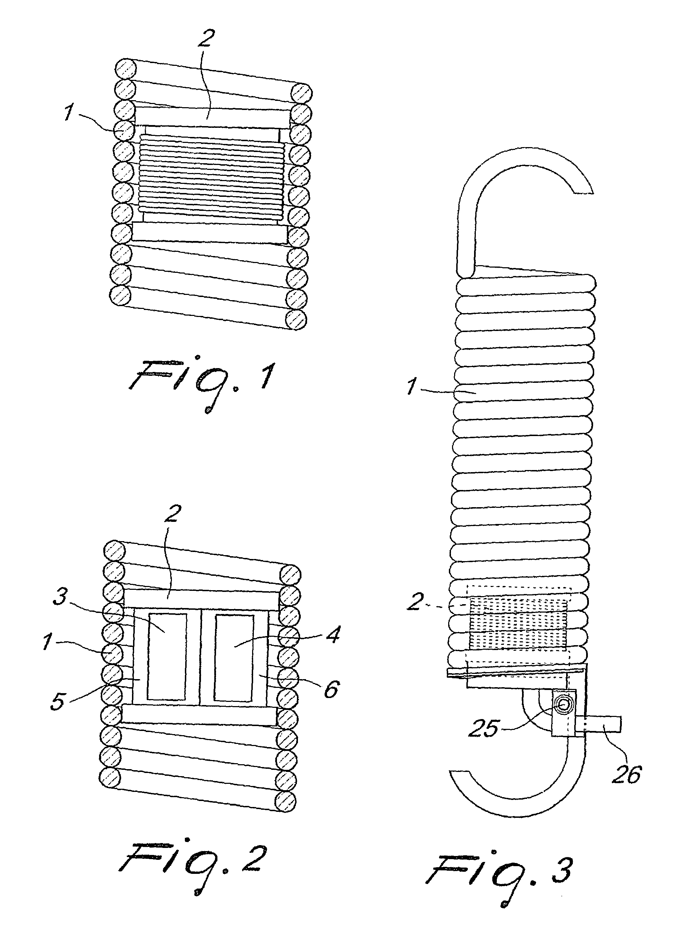

In particular, with reference to Figure 1, a first embodiment is shown of a sensor of the inductive type, which is applied to a spring, made of a material of the paramagnetic type, in order to measure its length variation both during elongation and during contraction.

Conveniently, the reference numeral 1 designates a metallic spring, while the reference numeral 2 designates the sensor, for example a solenoid, which is accommodated inside the spring or can be arranged outside it. A current is circulated in the solenoid, which generates a magnetic field which is approximately uniform within said solenoid and has a distribution, on the outside of the solenoid, which follows specific lines of force.

The energy accumulated by the system through the magnetic field naturally tends to a minimum, and therefore the lines of the magnetic field tend to concentrate in the regions where a material with higher permeability (i.e., the material of which the turns of the springs are constituted) is present, and to become less concentrated where said turns are not present.

When the spring is inactive, the lines of the magnetic field outside the solenoid are closer, since the path through the high-permeability material is substantially continuous. In this case, the magnetic circuit has minimum reluctance, and accordingly the value of the inductance across the solenoid is at its maximum.

Likewise, when the spring is extended, the magnetic circuit comprises the air gaps between one turn and the next and therefore follows a path with greater reluctance, with a consequent reduction of inductance across the solenoid.

The DC circuit model of the solenoid is constituted by an inductor, the value of which depends on the elongation of the spring, and by a parallel resistor, which represents the energy losses due to the conductivity of the winding of the solenoid.

If the solenoid is used with AC, the remarks made for the distribution of the magnetic field (which is now alternating) on the outside of the solenoid and for the inductance across it still apply as a first approximation. A new form of energy dissipation is instead introduced which is due to the currents induced in the metallic material that constitutes the spring. The equivalent AC circuit, across the solenoid, now comprises a second resistor in parallel, which indeed takes into account this power dissipation.

A measurement of the impedance across the solenoid therefore yields as a result a dipole formed by an inductor and a resistor in parallel, the values of which are a function of the elongation of the spring.

A dipole with these characteristics is usually described by an inductance value L and by a quality factor Q, which in the case of parallel modeling is defined as

$$Q = R_p/\omega L$$

where $R_P$ is the value of the parallel resistance, L is the value of the inductance and $\omega$ is the pulse rate at which the measurement is made. When the spring is inactive, the inductance has the maximum value and the resistance has the minimum value, and therefore the quality factor Q assumes the lowest value. When the spring is extended, the value of $R_P$ increases monotonically and the value of L decreases monotonically, and therefore a monotonic rise of the value of Q occurs.

A similar reasoning can be made if the equivalent dipole is modeled as a series dipole. In this case, the resistance $R_S$ would increase in value as the losses increase and therefore would decrease as the extension of the spring increases. The quality factor in this case is defined as

$$Q = \omega L/R_S$$

where both L and $R_S$ are decreasing monotonic functions of the extension of the spring.

Although in this case it is not evident, there is also a monotonic increase in the quality factor, since its definition reflects a property of the impedance across the dipole, regardless of how it is modeled (the quality factor Q of the series model must necessarily be equal to the quality factor of the parallel model).

Therefore, any measurement of one or more of the parameters that categorize the impedance across the solenoid (inductance, quality factor, resistance) can be correlated monotonically with the extension of the spring.

The sensor of the inductive type can be applied for springs of the metallic type regardless of the magnetic behavior, since in the equivalent circuit there is always at least the resistive term which models conductivity losses. The description is almost equivalent for springs made of diamagnetic material, except for the fact that in this case the lines of force are repelled (or in any case are not attracted) by the material that constitutes the spring.

Figure 2 is a view of a second embodiment of the sensor according to the invention, in which the reference numeral 1 again designates the spring, while the reference numeral 2 designates a sensor of the capacitive type, in which a capacitive element is inserted within the spring or is arranged outside it. Such capacitive element is provided by means of a first plate 3 and a second plate 4, which are accommodated within respective guards 5 and 6.

As an alternative, one of the two plates might be constituted by the turns of the spring, if said spring is metallic, or by the ground of the system: the sensing component would be constituted, in such cases, by a single plate and the corresponding guard.

If a potential difference is established between the two plates, an electrical field is generated between said two plates.

In the case of the metallic spring, since the electrical field is nil within a metal, in the case of such a spring, when inactive (for the sake of simplicity it is assumed that the inactive condition is the condition in which the spring is fully compressed), such field occurs only between the plates and the turns of the spring. Where the field is present, the dielectric constant is that of air, while the path is the shortest possible. This situation corresponds to a high capacitance value.

If the spring is extended, some field lines do not pass through the metal and the path increases in length. This situation produces a capacitance value which decreases monotonically as the spring is extended.

In the case instead of a dielectric spring, for reasons similar to the ones already described for the magnetic field, the electrical field lines tend to concentrate in the regions where a material with a higher dielectric constant is present.

In the case of an inactive spring, the electrical field lines pass predominantly through the material of the spring and therefore follow a path with a high dielectric constant. In this case, the capacitance between the plates has a high value. If the spring is extended, part of the path of the electrical field must necessarily be in air, and further the length of the field lines is on average greater. This configuration gives rise to a lower capacitance.

Also in this case, there is a capacitance value which decreases monotonically with the extension of the spring.

The capacitive system also can be modeled with a dipole which is composed of a resistor and a capacitor in series or in parallel. The capacitor represents the capacitance between the electrodes, while the resistor represents the losses due to conductivity of the plates of the capacitor.

If the capacitive system is subjected to an AC voltage, the resistive part of the equivalent dipole takes into account the conductivity losses in the spring, if the spring is metallic, or the dielectric losses, if the spring is dielectric.

Also in this case, it is possible to define a quality factor, defined as

$$Q = 1/\omega R_S C$$

in the case of a series model, or $Q = \omega R_P C$ for the parallel model, where $R_S$, $R_P$ and $\omega$ are respectively the series equivalent resistance, the parallel equivalent resistance, and the pulse rate at which the measurement is made.

When the spring is inactive, the capacitance is highest, and so are the losses. Therefore, $R_P$ assumes the lowest value, while $R_S$ assumes the highest value. The expression of the quality factor for the series dipole shows that Q assumes the minimum value.

The extension of the spring entails a reduction in capacitance and losses and therefore an increase in $R_P$ and a decrease in $R_S$, therefore a monotonic increase of the quality factor Q. Every measurement of the impedance between the two plates, therefore, can be correlated monotonically with the extension of the spring.

Therefore, the use of a sensor of the inductive or capacitive type combined with a spring, in which the sensor is crossed by a current, allows to obtain a variation of the electrical parameters of the sensor. In the case of an inductor, there is a variation in inductance and losses, whereas in the case of a capacitor, there is a variation in capacitance and losses.

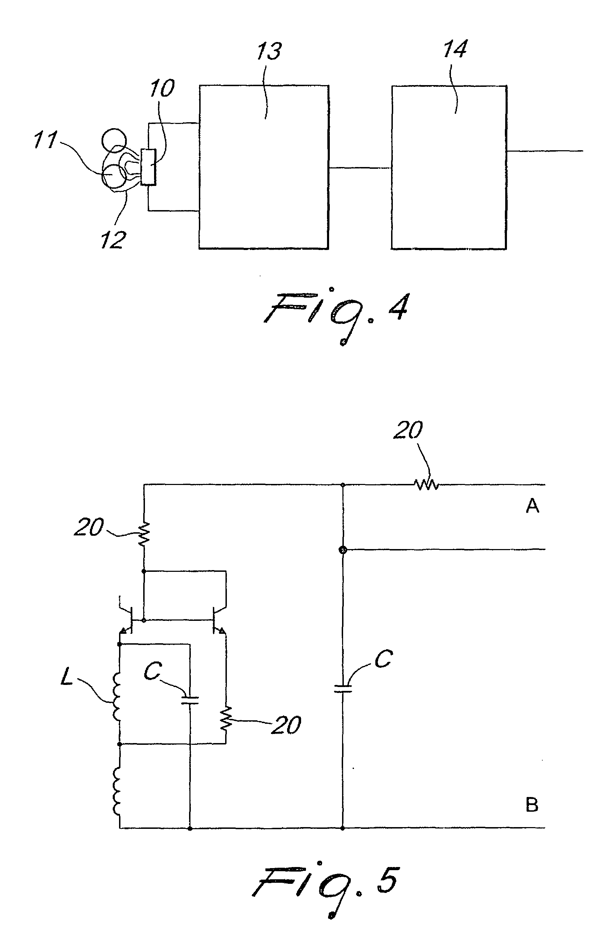

In order to be able to convert the variation of the electrical parameters into a measurement of the variation of the length of the spring, it is necessary to provide an oscillator in which the sensing element is a capacitor C or an inductor L which determines the characteristics (frequency and optionally amplitude) of the oscillation. The sensing element, designated in Figure 4 by the reference numeral 10, is made so that the lines of the electrical field (if the sensor is capacitive) or the lines of the magnetic field (if the sensor is inductive) generated by it affect the portion of space in which the measurement is to be made, which must comprise at least partly the turns of which the spring is made.

The conceptual diagram is shown in Figure 4. The reference numeral 11 designates the turns of the spring, the reference numeral 12 designates the lines of the electrical or magnetic field, the reference numeral 13 designates an oscillator, and the reference numeral 14 designates a control circuit.

As already explained earlier, the presence of a metallic material in the magnetic field of the solenoid changes its equivalent resistance (due to the conductivity losses) and possibly also its inductance (if a material has a permeability that is different from that of air). The variation in the unit of parameters is linked by means of a monotonic function to the volume occupied by the material in the field of action of the inductor. In particular, if the volume occupied by the metal is the largest possible (compressed spring), losses due to conductivity and inductance are highest and decrease as the spring extends. The extended condition of the spring can be deduced from the measurement of the energy required by the oscillator in order to sustain the oscillation: said energy is of course higher if the losses are high. This variation in energy requirement can be converted simply into a variation of the current absorbed by the circuit.

If the material of which the spring is made has a magnetic permeability which is significantly different than the given one, the extension of the spring also causes a variation of the inductance value and therefore can also be deduced from the measurement of the frequency of the oscillation.

This kind of reasoning can explain the operation of a capacitive sensor, which this time operates by means of electrical fields, is sensitive to the variation of the dielectric constant (as well as to losses), and has a metallic plate of a capacitor as its sensing element.

The choice of which parameter or parameters of the impedance of the sensor (L, R, C) are to be considered significant for determining the length of the spring depends on the type of sensor chosen (capacitive or inductive) and on the type of material of which the spring is made.

If, for example, the spring is constituted by diamagnetic material and the measurement method is the inductive one, the only significant parameter is the resistance R, since the inductance variations are probably negligible or difficult to detect.

If the spring is made of nonconducting dielectric material and the sensor is a capacitive one, the significant parameter is capacitance, since losses due to conductivity and polarization are difficult to measure.

Figure 5 illustrates one of the possible circuits used for a sensor of the inductive type, the purpose of which is to measure equivalent resistance (i.e., the quality factor).

In the circuit, power is supplied between two points A and B, and the output voltage of the node OUT is a function of the current absorbed by the oscillator. As can be seen, a thermal compensation network is provided and is represented schematically as a resistor 20, which is designed to render irrelevant the parametric variations of the components of the temperature sensor and thus make the circuit sensitive only to the environment detected by the inductor.

Figure 3 is a view of a detail of the fixing of the inductive sensor 2, shown in Figure 1, inside the spring 1. The sensor is fixed by means of a fixing screw 25. Figure 3 also illustrates the presence of a connecting cable 26 for supplying power to the inductive sensor 2.

In practice it has been found that the method and the sensor device according to the present invention fully achieve the intended aim and objects, since they allow to obtain an indirect measurement of the variation of the length of a spring, on the basis of variations of electrical parameters of an inductor, in the case of an inductive sensor, or of a capacitor, in the case of a capacitive sensor.

In particular, the device allows to determine reliably the elongation or contraction undergone by the spring with respect to a static known situation; the spring might be fitted on the machine so that at rest it is already subjected to a static load and the sensor would be able to assess the length variations with respect to said static situation.

The method and the device thus conceived are susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A method for measuring the length variation of a spring (1), said spring (1) having turns (11), the method comprising the steps of:

   arranging a sensor element (2) inside said spring (1) and mechanically anchoring said sensor element (2) to said spring (1) to a single point thereof;
generating field lines (12) by said sensor element (2) that affect the portion of space which comprises at least partly the spring turns (11) of said spring (1);
determining an impedance measurement of said sensor element (2) by measuring said field lines (12) affecting the portion of space which comprises at least partly the spring turns (11) of said spring (1), whereby said field lines (12) have a distribution that is a function of said length of said spring (1);
on the basis of said impedance measuring, determining a length variation of said spring (1).

2. The method according to claim 1, **characterized in that** said sensor element comprises an inductive sensor (2) which is adapted to be crossed by a current in order to generate a magnetic field.

3. The method according to claim 2, **characterized in that** said inductive sensor is a solenoid (2).

4. The method according to claim 3, **characterized in that** said impedance is the impedance across said solenoid (2).

5. The method according to claim 4, **characterized in that** said solenoid (2) can be represented schematically in circuit terms by an inductor, the inductance value of which depends on the elongation or contraction of the spring (1), and by a resistor in parallel, which represents the energy losses.

6. The method according to claim 5, **characterized in that** said energy losses are due to the conductivity of the winding of the solenoid.

7. The method according to claim 5, **characterized in that** said energy losses are due to the conductivity and polarization of the material that constitutes the spring (1).

8. The method according to claim 5, **characterized in that** the resistance value of said resistor depends on the elongation or contraction of the spring (1).

9. The method according to one or more of the preceding claims 5-8, **characterized in that** said solenoid (2) is subjected to an AC voltage.

10. The method according to claim 1, **characterized in that** said sensor element comprises a capacitive sensor (2).

11. The method according to claim 10, **characterized in that** said capacitive sensor (2) is subjected to a potential difference in order to generate an electrical field.

**12.** The method according to claim 10, **characterized in that** said capacitive sensor (2) can be represented schematically in circuit terms by means of a dipole composed of a resistor and a capacitor in series or in parallel.

**13.** The method according to claim 12, **characterized in that** the values of the resistance and capacitance of said resistor and said capacitor depend on the elongation or contraction of the spring (1).

**14.** The method according to claim 10, **characterized in that** said capacitive sensor (2) is subjected to an AC voltage.

**15.** A spring (1) comprising a sensor element (2) which allows to detect a variation of a length of the spring (1) with respect to an inactive condition, said sensor element (2) being arranged inside said spring (1) and said sensor element (2) being mechanically anchored to said spring (1) to a single point thereof, said spring (1) comprising turns (11), said sensor element (2) being adapted to generate field lines (12) that affect the portion of space which comprises at least partly the spring turns (11) of said spring (1), whereby said field lines (12) have a distribution that is a function of said length of said spring (1).

**16.** The spring (1) according to claim 15, **characterized in that** said sensor element (2) is an inductive sensor.

**17.** The spring (1) according to claim 15, **characterized in that** said sensor element (2) is a capacitive sensor.

**18.** The spring (1) according to claim 15, **characterized in that** it is made of metallic material.

**19.** The spring (1) according to claim 15, **characterized in that** it is made of dielectric material.

**20.** The spring (1) according to claim 15, **characterized in that** said sensor element (2) is connected to a portion of a turn (11) of said spring (1).

**21.** The spring (1) according to claim 15, **characterized in that** said sensor element (2) is adapted to be crossed by an electric current supplied by means of a power supply cable (26).

**Patentansprüche**

**1.** Ein Verfahren zur Messung der Längenänderung einer Feder (1), wobei die Feder (1) Wicklungen (11) hat und das Verfahren folgende Schritte umfasst:

Anordnung eines Sensorelements (2) in der Feder (1) und mechanische Verankerung des Sensorelements (2) an der Feder (1) an einem einzigen Punkt davon;
Erzeugung von Feldlinien (12) durch das Sensorelement (2), die den Teil des Raums beeinflussen, der zumindest teilweise die Federwicklungen (11) der Feder (1) umfasst;
Bestimmung einer Impedanzmessung des Sensorelements (2) durch Messung der Feldlinien (12), die den Teil des Raums beeinflussen, der zumindest teilweise die Federwicklungen (11) der Feder (1) umfasst, wodurch die Feldlinien (12) eine Verteilung haben, die eine Funktion der Länge der Feder (1) ist;
anhand der Impedanzmessung, Bestimmung einer Längenänderung der Feder (1).

**2.** Das Verfahren gemäß Anspruch 1, **dadurch gekennzeichnet, dass** das Sensorelement einen induktiven Sensor (2) umfasst, der ausgebildet ist, um von einem Strom durchquert zu werden, um ein Magnetfeld zu erzeugen.

**3.** Das Verfahren gemäß Anspruch 2, **dadurch gekennzeichnet, dass** der induktive Sensor ein Solenoid (2) ist.

**4.** Das Verfahren gemäß Anspruch 3, **dadurch gekennzeichnet, dass** die Impedanz die Impedanz über das Solenoid (2) ist.

**5.** Das Verfahren gemäß Anspruch 4, **dadurch gekennzeichnet, dass** das Solenoid (2) im Hinblick auf den Schaltkreis durch einen Induktor schematisch dargestellt werden kann, dessen Induktivitätswert von der Verlängerung oder Kontraktion der Feder (1) abhängt, und durch einen parallelen Widerstand, der die Energieverluste darstellt.

**6.** Das Verfahren gemäß Anspruch 5, **dadurch gekennzeichnet, dass** die Energieverluste auf der Leitfähigkeit der Wicklung des Solenoids beruhen.

**7.** Das Verfahren gemäß Anspruch 5, **dadurch gekennzeichnet, dass** die Energieverluste auf der Leitfähigkeit und Polarisierung des Materials beruhen, aus dem die Feder (1) besteht.

**8.** Das Verfahren gemäß Anspruch 5, **dadurch gekennzeichnet, dass** der Resistenzwert des Widerstands von der Verlängerung oder Kontraktion der Feder (1) abhängt.

**9.** Das Verfahren gemäß einem oder mehreren der obigen Ansprüche 5-8, **dadurch gekennzeichnet,**

**dass** das Solenoid (2) einer Wechselspannung ausgesetzt wird.

10. Das Verfahren gemäß Anspruch 1, **dadurch gekennzeichnet, dass** das Sensorelement einen kapazitiven Sensor (2) umfasst.

11. Das Verfahren gemäß Anspruch 10, **dadurch gekennzeichnet, dass** der kapazitive Sensor (2) zur Erzeugung eines elektrischen Felds einem Potentialunterschied ausgesetzt wird.

12. Das Verfahren gemäß Anspruch 10, **dadurch gekennzeichnet, dass** der kapazitive Sensor (2) im Hinblick auf den Schaltkreis durch einen Dipol schematisch dargestellt werden kann, der aus einem Widerstand und einem Kondensator, seriell oder parallel, besteht.

13. Das Verfahren gemäß Anspruch 12, **dadurch gekennzeichnet, dass** die Werte der Resistenz und Kapazität des Widerstands und des Kondensators von der Verlängerung oder Kontraktion der Feder (1) abhängen.

14. Das Verfahren gemäß Anspruch 10, **dadurch gekennzeichnet, dass** der kapazitive Sensor (2) einer Wechselspannung ausgesetzt wird.

15. Eine Feder (1), die ein Sensorelement (2) umfasst, das es ermöglicht, eine Änderung einer Länge der Feder (1) im Verhältnis zu einem inaktiven Zustand zu erfassen, wobei das Sensorelement (2) innerhalb der Feder (1) angeordnet und das Sensorelement (2) mechanisch an der Feder (1) an einem einzigen Punkt davon verankert ist, wobei die Feder (1) Wicklungen (11) umfasst und das Sensorelement (2) ausgebildet ist, um Feldlinien (12) zu erzeugen, die den Teil des Raums beeinflussen, der zumindest teilweise die Federwicklungen (11) der Feder (1) umfasst, wodurch die Feldlinien (12) eine Verteilung haben, die eine Funktion der Länge der Feder (1) ist.

16. Die Feder (1) gemäß Anspruch 15, **dadurch gekennzeichnet, dass** das Sensorelement (2) ein induktiver Sensor ist.

17. Die Feder (1) gemäß Anspruch 15, **dadurch gekennzeichnet, dass** das Sensorelement (2) ein kapazitiver Sensor ist.

18. Die Feder (1) gemäß Anspruch 15, **dadurch gekennzeichnet, dass** sie aus metallischem Material besteht.

19. Die Feder (1) gemäß Anspruch 15, **dadurch gekennzeichnet, dass** sie aus dielektrischem Material besteht.

20. Die Feder (1) gemäß Anspruch 15, **dadurch gekennzeichnet, dass** das Sensorelement (2) mit einem Abschnitt einer Wicklung (11) der Feder (1) verbunden ist.

21. Die Feder (1) gemäß Anspruch 15, **dadurch gekennzeichnet, dass** das Sensorelement (2) ausgebildet ist, um von einem elektrischen Strom durchquert zu werden, der mit Hilfe eines Stromversorgungskabels (26) zugeführt wird.

**Revendications**

1. Procédé pour mesurer la variation de longueur d'un ressort (1), ledit ressort (1) ayant des spires (11), le procédé comprenant les étapes consistant à :

   installer un élément détecteur (2) à l'intérieur dudit ressort (1) et accrocher ledit élément détecteur (2) audit ressort (1) en un seul point de celui-ci
   créer à l'aide dudit élément détecteur (2) des lignes de champ (12) qui affectent la partie de l'espace contenant au moins partiellement les spires (11) dudit ressort (1) ;
   déterminer une mesure d'impédance dudit élément détecteur (2) en mesurant lesdites lignes de champ (12) affectant la partie de l'espace contenant au moins partiellement les spires (11) dudit ressort (1), grâce à quoi lesdites lignes de champ (12) ont une répartition qui dépend de ladite longueur dudit ressort (1) ;
   à partir de ladite mesure d'impédance, déterminer une variation de longueur dudit ressort (1).

2. Procédé selon la revendication 1, **caractérisé en ce que** ledit élément détecteur est constitué par un détecteur inductif (2) conçu pour être traversé par un courant afin de créer un champ magnétique.

3. Procédé selon la revendication 2, **caractérisé en ce que** ledit détecteur inductif est un électro-aimant (2).

4. Procédé selon la revendication 3, **caractérisé en ce que** ladite impédance est l'impédance dans ledit électro-aimant (2).

5. Procédé selon la revendication 4, **caractérisé en ce que** ledit électro-aimant (2) peut être représenté schématiquement, en termes de circuit, par une bobine d'inductance dont la valeur d'inductance dépend de l'allongement ou de la contraction du ressort (1), et par une résistance en parallèle, qui représente les pertes d'énergie.

6. Procédé selon la revendication 5, **caractérisé en**

**ce que** lesdites pertes d'énergie sont dues à la conductivité de l'enroulement de l'électro-aimant.

7. Procédé selon la revendication 5, **caractérisé en ce que** lesdites pertes d'énergie sont dues à la conductivité et la polarisation de la matière qui constitue le ressort (1).

8. Procédé selon la revendication 5, **caractérisé en ce que** la valeur de résistance de ladite résistance dépend de l'allongement ou de la contraction du ressort (1).

9. Procédé selon une ou plusieurs des revendications précédentes 5 à B, **caractérisé en ce que** ledit électro-aimant (2) est soumis à une tension alternative.

10. Procédé selon la revendication 1, **caractérisé en ce que** ledit élément détecteur est constitué par un détecteur capacitif (2).

11. Procédé selon la revendication 10, **caractérisé en ce que** ledit élément détecteur (2) est soumis à une différence de potentiel afin de créer un champ électrique.

12. Procédé selon la revendication 10, **caractérisé en ce que** ledit détecteur capacitif (2) peut être représenté schématiquement, en termes de circuit, à l'aide d'un dipôle composé d'une résistance et d'un condensateur en série ou en parallèle.

13. Procédé selon la revendication 12, **caractérisé en ce que** les valeurs de résistance et de capacité de ladite résistance et dudit condensateur dépendent de l'allongement ou de la contraction du ressort (1).

14. Procédé selon la revendication 10, **caractérisé en ce que** ledit détecteur capacitif (2) est soumis à une tension alternative.

15. Ressort (1) comprenant un élément détecteur (2) qui permet de détecter une variation de longueur du ressort (1) par rapport à un état de repos, ledit élément détecteur (2) étant installé à l'intérieur dudit ressort (1) et ledit élément détecteur (2) étant accroché mécaniquement audit ressort (1) en un seul point de celui-ci, ledit ressort (1) comprenant des spires (11), ledit élément détecteur (2) étant conçu pour créer des lignes de champ (12) qui affectent la partie de l'espace contenant au moins partiellement les spires (11) dudit ressort (1), grâce à quoi lesdites lignes de champ (12) ont une répartition qui dépend de ladite longueur dudit ressort (1).

16. Ressort (1) selon la revendication 15, **caractérisé en ce que** ledit élément détecteur (2) est un détecteur inductif.

17. Ressort (1) selon la revendication 15, **caractérisé en ce que** ledit élément détecteur (2) est un détecteur capacitif.

18. Ressort (1) selon la revendication 15, **caractérisé en ce qu'**il est en matière métallique.

19. Ressort (1) selon la revendication 15, **caractérisé en ce qu'**il est en matière diélectrique.

20. Ressort (1) selon la revendication 15, **caractérisé en ce que** ledit élément détecteur (2) est relié à une partie d'une spire (11) dudit ressort (1).

21. Ressort (1) selon la revendication 15, **caractérisé en ce que** ledit élément détecteur (2) est conçu pour être traversé par un courant électrique fourni à l'aide d'un câble d'alimentation électrique (26).

Fig. 1

Fig. 2

Fig. 3

*Fig.4*

*Fig.5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003065704 A
- US 2004092349 A1
- US 4498043 A
- DE 10063535 A1